# EUROPÄISCHE PATENTSCHRIFT

(11) **EP 0 498 170 B1**
(45) Veröffentlichungstag und Bekanntmachung des Hinweises auf die Patenterteilung: **27.08.1997**
(21) Anmeldenummer: 92100525.2
(22) Anmeldetag: 14.01.1992
(51) Int. Cl.: G02B 6/12

(54) **Integriert optisches Bauelement für die Kopplung zwischen unterschiedlich dimensionierten Wellenleitern**
Integrated optical component for coupling waveguides of different dimensions
Composant optique intégré pour accoupler des guides d'ondes de dimensions différentes

(30) Priorität: 08.02.1991 DE 4103929
(43) Veröffentlichungstag der Anmeldung: 12.08.1992
(73) Patentinhaber: SIEMENS AKTIENGESELLSCHAFT, 80333 München (DE)
(72) Erfinder: Stegmüller, Bernhard, Dr. Ing., W-8900 Augsburg (DE)

(56) Entgegenhaltungen:
- EP-A- 495 202
- US-A- 4 773 720
- PATENT ABSTRACTS OF JAPAN vol. 12, no. 331 (P-755)7. September 1988 & JP-A-63 094 205
- PATENT ABSTRACTS OF JAPAN vol. 7, no. 27 (E-156)3. Februar 1983 & JP-A-57 183 091
- APPLIED PHYSICS LETTERS. Bd. 56, Nr. 12, 19. März 1990, NEW YORK US Seiten 1098 - 1100; SHAHAR ET AL.: 'Dynamic etch mask technique for fabricating tapered semiconductor optical wave guides and other structures
- APPLIED PHYSICS LETTERS. Bd. 55, Nr. 23, 4. Dezember 1989, NEW YORK US Seiten 2389 - 2391; SHANI ET AL.: 'Efficient coupling of a semiconductor laser to an optical fiber by means of a tapered waveguide on silicon'

## Beschreibung

Die vorliegende Erfindung betrifft ein integriert optisches Bauelement.

Aus US-A-4 773 720 und Appl. Phys. Lett., Bd. 55, Nr. 23, 4. Dez. 1989, New York, US, Seiten 2389-2391 ist jeweils eine Wellenleiterstruktur aus zwei Wellenleitern für eine Wellenführung in der gleichen Längsrichtung bekannt, wobei im Querschnitt senkrecht zur Längsrichtung die Wellenführung eines Wellenleiters sowohl in einer Breite parallel als auch in einer Dicke senkrecht zur Oberfläche des Substrats kleiner als die Wellenführung des anderen Wellenleiters ist. Der eine Wellenleiter verläuft im Bereich des anderen Wellenleiters. In einer der beiden Längsrichtungen verjüngt sich der Querschnitt der Wellenführung des einen Wellenleiters taperförmig von einer von null verschiedenen Breite auf die Breite null oder es erweitert sich der Querschnitt der Wellenführung des anderen Wellenleiters taperförmig von einer bestimmten Breite auf eine größere Breite.

EP-A-495 202, das eine Druckschrift gemäß Artiled 54(3) EPÜ ist, beschreibt die Fleckanpassung zwischen einem größeren und einem kleimeren Fleckdurchmesser durch Taperung der Schichtdicke des Wellenleiters. Allerdings ist die Breite des Wellenleiters nicht konstant.

Eine wesentliche Bedingung für die optoelektronische Übertragungstechnik ist aie effektive, stabile und einfach justierbare optische Kopplung zwischen einer Glasfaser als Übertragungsmedium und einem optoelektronischen Bauelement (OED) als Sendebzw. Empfangselement. Zu diesem Zweck muß die elektromagnetische Feldverteilung (EM) quer (transversal und lateral) zur Ausbreitungsrichtung des Lichtes in der Glasfaser an die Feldverteilung im OED angepaßt werden. Die Wellenführung in OEDs erfolgt im allgemeinen mit Wellenleitern, in denen sich die EM-Feldverteilung quer zur Ausbreitungsrichtung des Lichtes stark von derjenigen in der Glasfaser unterscheidet. Eine Anpassung der Wellenführung zwischen GED und Glasfaser wird mit Hilfe eines adiabatischen Tapers erreicht. Ein solcher adiabatischer Taper besteht aus einem Wellenleiter, dessen laterale und transversale Wellenführung entlang der Ausbreitungsrichtung des Lichts sich so ändert, daß keine optischen Verluste durch Konversion der Moden auftreten. Bisher wurde zu diesem Zweck die geometrische Form des Wellenleiters im OED entlang der Ausbreitungsrichtung des Lichts sowohl in lateraler als auch in transversaler Richtung geändert (A.Shahar, W.J. Tomlinson, A. Yi-Yan, M. Seto, R.J. Deri: "Dynamic etch mask technique for fabricating tapered semiconductor optical waveguides and other structures", Appl. Phys. Lett. 56, 1098-1100 (1990). Dazu sind technologische Maßnahmen zur Änderung der geometrischen Dimensionen in beiden Richtungen senkrecht zur Lichtausbreitung erforderlich.

Aufgabe der vorliegenden Erfindung ist es, ein optoelektronisches Bauelement anzugeben, das möglichst einfach herstellbar ist und das die Kopplung zwischen unterschiedlich dimensionierten Wellenleitern, insbesondere das Ankoppeln an eine Glasfaser ermöglicht.

Diese Aufgabe wird mit dem erfindungsgemäßen Bauelement mit den Merkmalen des Anspruches 1 gelöst. Weitere Ausgestaltungen ergeben sich aus den Unteransprüchen.

Der für die Wellenführung vorgesehene innere Teil der Glasfaser hat in der Regel einen größeren Durchmesser als die laterale Abmessung der Wellenleiter in Halbleiterbauelementen. Daher ist zumindest zum Ankoppeln einer Glasfaser in Längsrichtung des Wellenleiters in einem Bauelement eine Aufweitung der Wellenführung erforderlich. Um diese Aufweitung ohne eine Konversion des geführten Modes zu erreichen und gleichzeitig eine einfache Herstellbarkeit des Bauelementes zu ermöglichen, wird erfindungsgemäß ein sich nur in einer Richtung verjüngender adiabatischer Taper eingesetzt. Ein Aufbau entsprechend der vorliegenden Erfindung sieht vor, daß in einem Abschnitt in Längsrichtung der Wellenführung gleichzeitig eine schmale Wellenführung z. B. durch eine ringsherum in Material niedrigeren Brechungsindexes eingebettete streifenförmige Wellenleiterschicht und eine breite Wellenführung, die in den Abmessungen der Wellenführung in einer Glasfaser entspricht, durch einen Stegwellenleiter vorhanden sind und daß längs dieses Abschnittes der streifenförmige schmale Wellenleiter taperförmig kontinuierlich nur in der transversalen Richtung in der Dicke vermindert wird. Der Wellenleiter endet in einem Halbleitermaterial, das ebenfalls für Ausbreitung der Strahlung geeignet ist und in dem eine breitere laterale Wellenführung durch den in diesem Material ausgebildeten Stegwellenleiter erfolgt. Entsprechend ist auch eine umgekehrte Anpassung einer breiten Wellenführung an eine schmale Wellenführung möglich. Wesentlich für den erfindungsgemäßen Aufbau ist es, daß die laterale Struktur nicht verändert wird. Eine taperförmige Strukturierung ergibt sich daher nur in transversaler Richtung, weswegen dieser erfindungsgemäße Aufbau wesentlich einfacher herstellbar ist als aus dem Stand der Technik bekannte Bauelemente.

Das erfindungsgemäße Bauelement enthält über eine Länge von mindestens ca. 100 µm zwei verschiedene Wellenleiterstrukturen, die in etwa konzentrisch zueinander angeordnet sind, so daß sie gemeinsam einen Wellenleiter darstellen. Eine dieser Wellenleiterstrukturen ist innerhalb einer Länge von mindestens ca. 500 µm möglichst jedoch 1000 bis 1500 µm durch eine eindimensionale kontinuierliche Reduzierung der Abmessung dieser Wellenleiterstruktur eliminiert oder eingefügt. Die Wellenleiterstrukturen können vergrabene Heterostrukturen (BH) oder Stegwellenleiter (RG) sein. Die Herstellung kann mit Hilfe von naßchemischer Ätzung, Ionenstrahlätzung oder selektiver Epitaxie erfolgen.

Es folgt eine Beschreibung des erfindungsgemäßen Bauelementes anhand der Fig. 1 bis 15.
- Fig. 1, 3, 13, 14 und 15: zeigen erfindungsgemäße Bauelemente im Längsschnitt.
- Fig. 2 und 4: zeigen erfindungsgemäße Bauelemente in Aufsicht.
- Fig. 5, 6, 7, 8, 9, 10, 11 und 12: zeigen erfindungsgemäße Bauelemente im Querschnitt.

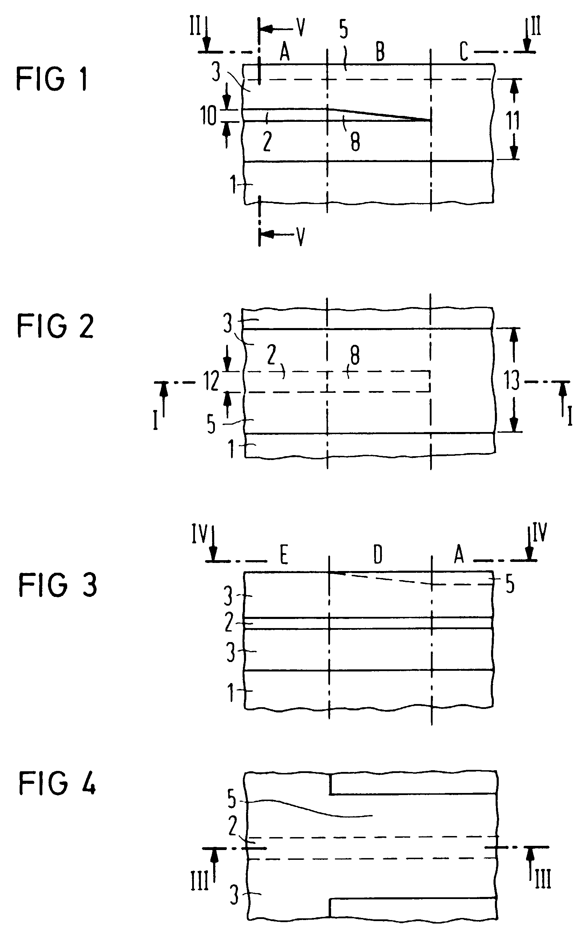

Fig. 1 zeigt auf einer Basis 1, die ein Substrat oder eine Halbleiterschicht sein kann, eine Schicht aus Halbleitermaterial, die einen breiten Wellenleiter 3 bildet. In diesem breiten Wellenleiter 3 ist ein schmaler Wellenleiter 2 eingebettet. Die Bezeichungen "schmal" und "breit" beziehen sich dabei auf die laterale Ausdehnung des betreffenden Wellenleiters. Dieselbe Anordnung ist in Fig. 2 in Aufsicht dargestellt. Dort sind die laterale Abmessung 12 des schmalen Wellenleiters 2 und die laterale Abmessung 13 des breiten Wellenleiters 3 eingezeichnet. Die transversale Abmessung 10 des schmalen Wellenleiters 2 ist entsprechend geringer als die transversale Abmessung 11 des breiten Wellenleiters 3, in den der schmale Wellenleiter 2 eingebettet ist. Die Wellenführung ergibt sich in der Schicht des breiten Wellenleiters 3 durch einen in der Oberfläche ausgebildeten breiten Steg 5. In einem eingezeichneten Bereich A sind beide Wellenführungen gleichzeitig vorhanden. In einem eingezeichneten Bereich B wird der schmale Wellenleiter 2 in der transversalen Abmessung, d. h. in einer Richtung senkrecht zu der überwachsenen Oberfläche der Basis 1, kontinuierlich in der Dicke vermindert. Am Ende des Bereiches B endet der schmale Wellenleiter 2, so daß in einem angrenzenden Bereich C nur noch die Wellenführung durch den breiten Steg 5 in dem breiten Wellenleiter 3 vorhanden ist. In dem Bereich B besitzt der schmale Wellenleiter 2 die Gestalt eines Tapers 8, der sich nur in der transversalen Richtung keilförmig verjüngt.

In Fig. 3 ist ein erfindungsgemäßer Aufbau in Längsrichtung gezeigt, bei dem die breite Wellenführung in einem Bereich D kontinuierlich vermindert ist. In einem Bereich A, der z. B. dem Bereich A aus Fig. 1 entsprechen kann, sind beide Wellenführungen gleichzeitig vorhanden. In dem Bereich D wird die Höhe des breiten Steges 5 in der Oberfläche des breiten Wellenleiters 3 kontinuierlich bis auf null vermindert. In dem angrenzenden Bereich E ist die Oberfläche des breiten Wellenleiters 3 eben, und die laterale Wellenführung erfolgt ausschließlich durch den schmalen Wellenleiter 2. Diese Anordnung ist in Aufsicht in Fig. 4 dargestellt.

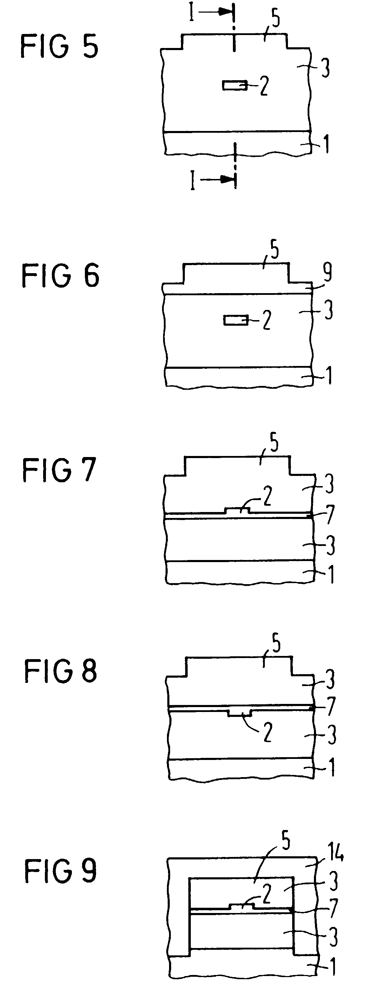

Fig. 5 zeigt einen Querschnitt durch den Bereich B in Fig. 1 bzw. durch den Bereich D in Fig. 3.

Als Material für den breiten Wellenleiter 3 kommen z. B. InP und GaAs in Frage. Der schmale Wellenleiter 2 kann z. B. InGaAsP oder GaAlAs sein. Es ist auch möglich, daß der breite Wellenleiter 3 InGaAsP bzw. GaAlAs mit einer anderen Zusammensetzung als derjenigen des schmalen Wellenleiters 2 ist. Die Oberfläche des breiten Wellenleiters bzw. des breiten Steges 5 kann mit einem Dielektrikum, z. B. einem Oxid bedeckt sein.

Der Brechungsindex des Materiales des schmalen Wellenleiters 2 ist bei dem Ausführungsbeispiel jeweils größer als der Brechungsindex des Materials des breiten Wellenleiters 3. Der Brechungsindex des Materiales des breiten Wellenleiters 3 wiederum ist größer als der Brechungsindex der Basis 1, der wiederum größer ist als der Brechungsindex eines gegebenenfalls auf die Oberfläche aufgebrachten Oxids.

Fig. 6 zeigt einen Querschnitt entsprechend Fig. 5, bei dem der breite Steg 5 nicht in der Oberfläche des breiten Wellenleiters 3, sondern in einer gesonderten Deckschicht 9 ausgebildet ist. Diese Deckschicht 9 kann ebenfalls InP oder InGaAsP bzw. GaAs oder GaAlAs sein.

In Fig. 7 ist ein alternatives Ausführungsbeispiel im Querschnitt dargestellt, bei dem eine Wellenleiterschicht 7 mit einem darin ausgebildeten stegförmigen schmalen Wellenleiter 2 in dem breiten Wellenleiter 3 eingebettet ist. Der schmale Wellenleiter 2 ist in diesem Ausführungsbeispiel auf der der Basis 1 abgewandten Seite und in dem Ausführungsbeispiel nach Fig. 8 auf der der Basis 1 zugewandten Seite der Wellenleiterschicht 7 ausgebildet.

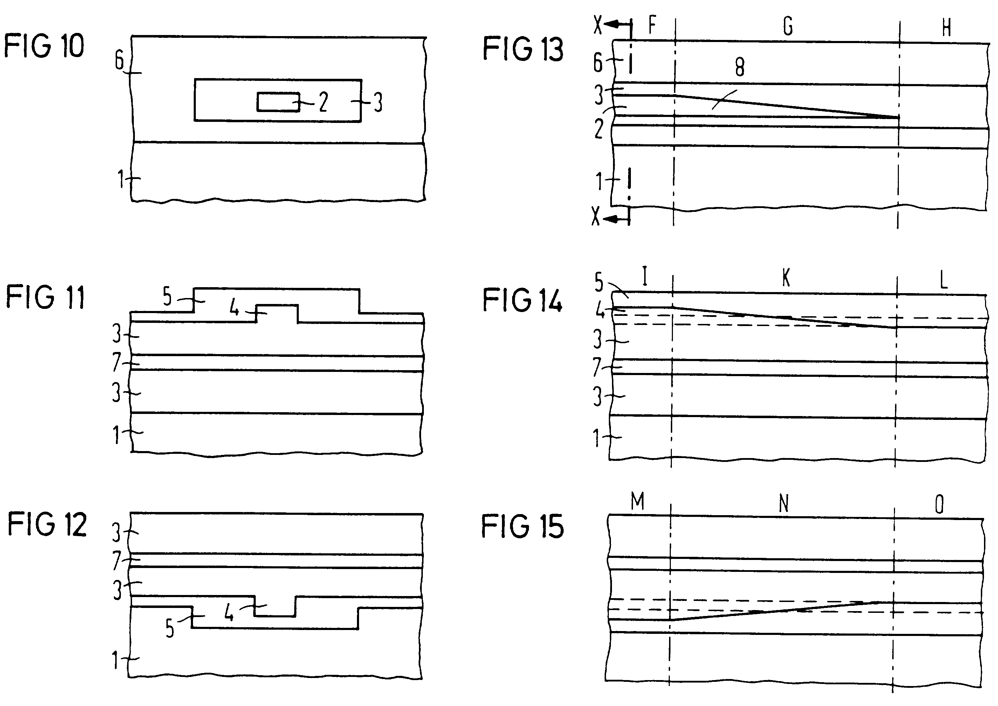

In Fig. 9 ist der breite Steg 5 bis in die Basis 1 hineinreichend ausgebildet. Zwischen zwei Anteilen des breiten Wellenleiters 3 befindet sich eine Wellenleiterschicht 7 mit einem darin vorhandenen stegförmigen schmalen Wellenleiter 2. Die Oberfläche des breiten Steges 5 ist in diesem Ausführungsbeispiel mit einer Dielektrikumschicht 14 überdeckt.

Statt durch einen Steg kann die breite Wellenführung auch in BH-Struktur mit einem in ein Confinement 6 eingebetteten breiten Wellenleiter 3 erfolgen. Die Brechungsindexe nehmen von dem Confinement 6 über den darin vorhandenen breiten Wellenleiter 3 zu dem in dem breiten Wellenleiter 3 näherungsweise konzentrisch verlaufenden schmalen Wellenleiter 2 jeweils zu. Durch diese unterschiedlichen Brechungsindexe wird jeweils eine laterale (und transversale) Wellenführung bewirkt. Entsprechend der Ausführung von Fig. 1 wird auch in dem Ausführungsbeispiel nach Fig. 10 in einem Bereich G der schmale Wellenleiter 2 in der Dicke, d. h. der transversalen Abmessung, kontinuierlich vermindert, so daß in einem angrenzenden Bereich H nur noch der breite Wellenleiter 3 vorhanden ist (s. Fig. 13). Der in Fig. 13 dargestellte Bereich F, in dem beide Wellenleiter vorhanden sind, hat den in Fig. 10 dargestellten Querschnitt.

Es ist auch möglich, beide überlagerte Wellenführungen durch Stegwellenleiter zu realisieren. In Fig. 11 ist eine in dem breiten Wellenleiter 3 vorhandene Wellenleiterschicht 7 eingezeichnet. Die Oberfläche des breiten Wellenleiters 3 ist mit einem schmalen Steg 4 zur lateralen Wellenführung versehen. Darüber befindet sich eine weitere Schicht mit einem darin ausgebildeten breiten Steg für eine breite Wellenführung. Entsprechend Fig. 14 können in einem Bereich I beide Wellenführungen gleichzeitig vorhanden sein. In einem angrenzenden Bereich K ist die Höhe des schmalen Steges 4 kontinuierlich auf null vermindert. In dem darin angrenzenden Bereich ist dann nur noch der breite Steg 5 und damit nur noch eine breite Wellenführung vorhanden. Alternativ ist es auch möglich, die Höhe des breiten Steges 5 in diesem Bereich K auf null zu vermindern, so daß in dem Bereich L nur die schmale Wellenführung durch den schmalen Steg 4 vorhanden ist. Welche Wellenführung in dem mittleren Bereich K jeweils vermindert ist, hängt von der jeweiligen Anwendung des erfindungsgemäßen Bauelementes ab.

Statt den schmalen Steg 4 und den breiten Steg 5 in der Oberfläche des Bauelementes auszubilden, können diese stegförmigen Wellenführungen auch in der Basis 1 vorhanden sein, um eine ebene Oberfläche des Bauelementes zu ermöglichen. In diesem Fall ist in die Basis 1 (z. B. das Substrat) ein streifenförmiger Graben für den breiten Steg 5 geätzt. In dem breiten Steg 5 befindet sich ein weiterer Graben, der von dem schmalen Steg 4 eingenommen wird. Die Wellenleiterschicht 7 ist wieder ganzflächig aufgewachsen und von einer weiteren Schicht bedeckt. Entsprechend dem vorhergehenden Ausführungsbeispiel kann in einem Bereich N (Fig. 15) die Höhe des breiten Steges 5 kontinuierlich vermindert sein, so daß in angrenzenden Bereichen M bzw. 0 beide Wellenführungen bzw. nur die schmale Wellenführung durch den schmalen Steg 4 vorhanden ist.

In allen beschriebenen Ausführungsformen und den naheliegenden Kombinationen und Verallgemeinerungen ist eine einfache Möglichkeit beschrieben, durch eine ausschließlich in transversaler Richtung erfolgende Modifikation eines Wellenleiters eine Anpassung zwischen Wellenführungen unterschiedlicher Abmessungen zu ermöglichen.

## Patentansprüche

1. Integriert optisches Bauelement mit einer auf der Oberfläche eines Substrats (1) ausgebildeten Wellenleiterstruktur aus zwei entlang einer vorgegebenen Längsrichtung hintereinander angeordneten und sich in einem vorgegebenen Längsabschnitt überlappenden Wellenleitern (2, 3) für Wellenführung in Längsrichtung, wobei im Querschnitt senkrecht zur Längsrichtung die Wellenführung eines Wellenleiters (2) sowohl in der Breite parallel als auch in der Dicke senkrecht zur Oberfläche des Substrats (1) kleiner als die Wellenführung des anderen Wellenleiters (3) ist, wobei der eine Wellenleiter (2) zumindest in dem gemeinsamen Längsabschnitt (D, K) einem Bereich des anderen Wellenleiters (3) ersetzt, wobei die Wellenführung des anderen Wellenleiters durch einen Steg (5) definiert ist, wobei im gemeinsamen Längsabschnitt (D, K) die senkrecht zur Oberfläche des Substrats (1) gemessene Höhe des Steges (5) in Längsrichtung taperförmig abnimmt und wobei die parallel zur Oberfläche des Substrats (1) gemessene Breite des Steges (5) und Breite des zwei Wellenleiter konstant sind.

2. Integriert optisches Bauelement mit einer auf der Oberfläche eines Substrats (1) ausgebildeten Wellenleiterstruktur aus zwei entlang einer vorgegebenen Längsrichtung hintereinander angeordneten und sich in einem vorgegebenen Längsabschnitt Überlappenden Wellenleitern (2, 3) für Wellenführung in Längsrichtung, wobei im Querschnitt senkrecht zur Längsrichtung die Wellenführung eines Wellenleiters (2) sowohl in der Breite parallel als auch in der Dicke senkrecht zur Oberfläche des Substrats (1) kleiner als die Wellenführung des anderen Wellenleiters (3) ist, wobei der eine Wellenleiter (2) zumindest in dem gemeinsamen Längsabschnitt einem Bereich des anderen Wellenleiters (3) ersetzt wobei im gemeinsamen Längsabschnitt die senkrecht zur Oberfläche des Substrats (1) gemessene Dicke des anderen Wellenleiters (3) in Längsrichtung taperförmig abnimmt, und wobei die Breite der zwei Wellenleiter konstant ist.

3. Bauelement nach Anspruch 1, bei dem die Höhe des Steges (5) des anderen Wellenleiters (3) auf null abnimmt.

4. Bauelement nach einem der vorhergehenden Ansprüche, bei dem der eine Wellenleiter (2) aus einem in den anderen Wellenleiter (3) eingebetteten Wellenleiter höheren Brechungsindexes besteht.

5. Bauelement nach einem der Ansprüche 1,3 oder 4 bei dem die Wellenführung des einen Wellenleiters (2) durch einen auf einer in dem anderen Wellenleiter (3) eingebetteten Wellenleiterschicht (7) ausgebildeten und vom Steg (5) des anderen Wellenleiters (3) verschiedenen Steg (4) definiert ist.

6. Bauelement nach Anspruch 5, bei dem der Steg (5) des anderen Wellenleiters (3) den Steg (4) des einen Wellenleiters (2) zumindest im gemeinsamen Längsabschnitt (K) umfaßt.

7. Bauelement nach Anspruch 5 oder 6, bei dem im gemeinsamen Längsabschnitt (K) die senkrecht zur Oberfläche des Substrats (1) gemessene Höhe des Steges (4) des einen Wellenleiters (3) in einer der beiden Längsrichtungen taperförmig abnimmt.

8. Bauelement nach Anspruch 7, bei dem der Steg (4) des einen (2) und der Steg (5) des anderen Wellenleiters (3) unterschiedliche Brechungsindizes aufweisen.

## Claims

1. Integrated optical component with a waveguide structure which is formed on the surface of a substrate (1) and consists of two waveguides (2, 3), for waveguiding in the lengthwise direction, which are arranged one after the other along a predetermined lengthwise direction and overlap in a predetermined lengthwise section, the waveguiding of a waveguide (2), in cross-section perpendicular to the longitudinal direction, being smaller both in the width parallel to the surface of the substrate (1) and in the thickness perpendicular thereto than the waveguiding of the other waveguide (3), the one waveguide (2) replacing a region of the other waveguide (3) at least in the common lengthwise section (D, K), the waveguiding of the other waveguide having been defined by a segment (5), the height of the segment (5), measured perpendicular to the surface of the substrate (1) decreasing in taper-fashion in the lengthwise direction in the common lengthwise section (D, K), and the width of the segment (5), measured in parallel to the surface of the substrate (1), and the width of the two waveguides being constant.

2. Integrated optical component with a waveguide structure which is formed on the surface of a substrate (1) and consists of two waveguides (2, 3), for waveguiding in the lengthwise direction, which are arranged one after the other along a predetermined lengthwise direction and overlap in a predetermined lengthwise section, the waveguiding of a waveguide (2), in cross-section perpendicular to the longitudinal direction, being smaller both in the width parallel to the surface of the substrate (1) and in the thickness perpendicular thereto, than the waveguiding of the other waveguide (3), the one waveguide (2) replacing a region of the other waveguide (3) at least in the common lengthwise section (D, K), the thickness of the other waveguide (3), measured perpendicular to the surface of the substrate (1) decreasing in taper-fashion in the lengthwise direction in the common lengthwise section, and the width of the two waveguides being constant.

3. Component according to Claim 1, in which the height of the segment (5) of the other waveguide (3) decreases to zero.

4. Component according to one of the preceding claims, characterized in that the one waveguide (2) consists of a waveguide of higher refractive index embedded in the other waveguide (3).

5. Component according to one of Claims 1, 3 or 4, in which the waveguiding of the one waveguide (2) is defined by a segment (4) which is formed on a waveguide layer (7) embedded in the other waveguide (3) and is different from the segment (5) of the other waveguide (3).

6. Component according to Claim 5, in which the segment (5) of the other waveguide (3) encloses the segment (4) of the one waveguide (2) at least in the common lengthwise section (K).

7. Component according to Claim 5 or 6, in which the height of the segment (4) of the one waveguide (3), measured perpendicular to the surface of the substrate (1), decreases in taper-fashion in one of the two lengthwise directions in the common lengthwise section (K).

8. Component according to Claim 7, in which the segment (4) of the one (2) and the segment (5) of the other waveguide (3) have different refractive indices.

## Revendications

1. Composant optique intégré comportant une structure de guide d'ondes formée à la surface d'un substrat (1) constitué de deux guides d'ondes (2, 3) disposés l'un derrière l'autre dans une direction longitudinale prédéterminée et se recouvrant dans une section longitudinale prédéterminée pour le guidage des ondes dans la direction longitudinale, dans la section transversale perpendiculaire à la direction longitudinale le guidage des ondes d'un guide d'ondes (2) étant plus petit que le guidage des ondes de l'autre guide d'ondes (3) à la fois dans la largeur parallèle à la surface du substrat (1) et dans l'épaisseur perpendiculaire à celle-ci, l'un des deux guides d'ondes (2) remplaçant une zone de l'autre guide d'ondes (3) au moins dans leur section longitudinale commune (D, K), le guidage des ondes de l'autre guide d'ondes étant défini par une moulure (5), la hauteur de la moulure (5) dans la section longitudinale commune (D, K) mesurée perpendiculairement à la surface du substrat (1) diminuant en forme de cône dans la direction longitudinale et la largeur de la moulure (5) mesurée parallèlement à la surface du substrat (1) et la largeur des deux guides d'ondes étant constantes.

2. Composant optique intégré comportant une structure de guide d'ondes formée à la surface d'un substrat (1) constitué de deux guides d'ondes (2, 3) disposés l'un derrière l'autre dans une direction longitudinale prédéterminée et se recouvrant dans une section longitudinale prédéterminée pour le guidage des ondes dans la direction longitudinale, dans la section transversale perpendiculaire à la direction longitudinale le guidage des ondes d'un guide d'ondes (2) étant plus petit que le guidage des ondes de l'autre guide d'ondes (3) à la fois dans la largeur parallèle à la surface du substrat (1) et dans l'épaisseur perpendiculaire à celle-ci, l'un des deux guides d'ondes (2) remplaçant une zone de l'autre guide d'ondes (3) au moins dans leur section longitudinale commune (D, K), l'épaisseur de l'autre guide d'ondes (3) dans la section longitudinale commune mesurée perpendiculairement à la surface du substrat (1) diminuant en forme de cône, et la largeur des deux guides d'ondes étant constante.

3. Composant selon la revendication 1 dans lequel la hauteur de la moulure (5) de l'autre guide d'ondes (3) diminue jusqu'à zéro.

4. Composant selon l'une des revendications précédentes dans lequel l'un des guides d'ondes (2) est constitué d'un guide d'ondes présentant un indice de réfraction supérieur incorporé dans l'autre guide d'ondes (3).

5. Composant selon l'une des revendications 1, 3 ou 4 dans lequel le guidage des ondes de l'un des guides d'ondes (2) est défini par une moulure (4) formée sur une couche du guide d'ondes (7) incorporée dans l'autre guide d'ondes (3) et différente de la moulure (5) de l'autre guide d'ondes (3).

6. Composant selon la revendication 5 dans lequel la moulure (5) de d'autre guide d'ondes (3) comprend la moulure (4) de l'un des guides d'ondes (2) au moins dans leur section longitudinale commune (K).

7. Composant selon les revendications 5 ou 6, dans lequel dans la section longitudinale commune (K) la hauteur de la moulure (4) de l'un des guides d'ondes (3) mesurée perpendiculairement à la surface du substrat (1) diminue en forme de cône dans l'une des deux directions longitudinales.

8. Composant selon la revendication 7, dans lequel la moulure (4) de l'un des guides d'ondes (2) et la moulure (5) de l'autre guide d'ondes (3) présente des indices de réfraction différents.
